# EUROPEAN PATENT APPLICATION

(11) **EP 1 114 981 A2**
(43) Date of publication of application: **11.07.2001**
(21) Application number: 00101887.8
(22) Date of filing: 31.01.2000
(51) Int. Cl.: G01C 21/36

(54) **On-board vehicle computerized display system for multiple users**

(30) Priority: 09.01.2000 IL 13394700
(71) Applicant: Naftel Technologies Ltd., Netanya 42504 (IL)
(72) Inventor: Hantsis, Elie, Raanana 43352 (IL); Nissani, Naftali, Herzlia 46752 (IL)
(74) Representative: Rupprecht, Kay, Dipl.-Ing.

(57) **Abstract**

A multiple-user computerized display system for use on a mobile platform, including a computer, two or more computer-driven display devices, bus apparatus connecting the two or more devices to the computer, and multitasking software resident in the computer for facilitating different, selectable use of each display device simultaneously.

## Description

### FIELD OF THE INVENTION

The present invention relates to on-board vehicle computerized display systems generally, and, in particular, to on-board computerized display systems for multiple users located at different stations within a vehicle, within a multitasking environment.

### BACKGROUND OF THE INVENTION

It is well known in the art to provide centralized entertainment systems in vehicles. Such systems have been known for several years in the context of aircraft, and are also known to be provided in land vehicles, such as automobiles.

Since the advent of GPS for civilian use, as well as widespread introduction of wireless telephone systems, the vehicle generally, and the automobile in particular, has become a natural platform for computerization, beyond that known simply for monitoring vehicle operations.

A further natural development of computerization in vehicles, has been the integration of systems which may have previously been separate, such as GPS based navigation systems, and wireless telephone systems.

Of particular note is USP 5,794,164 to Beckert et al, entitled "Vehicle Computer System." Disclosed in the patent is a vehicle computer system which has a housing sized to be mounted in a vehicle dashboard or other appropriate location, a computer mounted within the housing, and an open platform operating system which executes on an open hardware architecture computer. The open platform operating system supports multiple different applications that can be supplied by a vehicle user. By way of example, the operating system can support applications pertaining to entertainment, navigation, communications, security, diagnostics, and others.

The computer has two independent processors. One processor, which runs the operating system, is mounted in a stationary base unit of the housing and the other processor is mounted to a faceplate which is detachable from the base unit. When the faceplate is attached, the first processor provides the primary control over all operating systems (i.e., entertainment, navigation, communications, security, diagnostics, and others) and the faceplate processor is subservient. When the faceplate is detached, it forms a portable RF device with the faceplate processor providing radio and communications capabilities.

The cited reference also relates to a vehicle server system, in which the above-described computer system includes a server computing unit which "runs a server operating system, such as Windows NT® " (column 12. Lines 51-52), and a plurality of clients, each of which can be used to run different, selected applications.

The following patents are also relevant to understand the state of the art:
USP 5,629,626, entitled "Apparatus And Method For Measuring Buried Ferromagnetic Objects With A High Accuracy Of Position And In Synchronization With A Sync Pulse Provided By A Global Positioning System";
USP 5,627,974, entitled "Computer docking system with means for allowing a microprocessor in a docking station to talk to a central processing unit in a docked portable computer";
USP 5,627,547, entitled " Mapless GPS navigation system in vehicle entertainment system"; USP 5,610,822, entitled "Position-related multi-media presentation system";
USP 5,559,707, entitled "Computer Aided Routing System";
USP 5,555,502, entitled "Display And Control Apparatus For The Electronic Systems Of A Motor Vehicle";
USP 5,555,491, entitled "Compact Docking Station For Portable Computer";
USP 5,555,172, entitled "User Interface For Controlling Accessories And Entering Data In A Vehicle";
USP 5,546,273, entitled "Automotive Audio System"; USP 5,455,823, entitled "Integrated Communications Terminal";
USP 5,452,289, entitled "Computer-Based Multifunction Personal Communications System";
USP 5,313,200, entitled "Road Traffic Congestion Display System"; USP 5,289,378, entitled "Vehicle LAN With Adapters For Coupling Portable Data Terminals";
USP 5,150,609, entitled "On Board Computer For A Motor Vehicle";
USP 4,866,515, entitled "Passenger Service And Entertainment System For Supplying Frequency-Multiplexed Video, Audio, And Television Game Software Signals To Passenger Seat Terminals";
USP 4,827,520, entitled "Voice Actuated Control System For Use In A Vehicle";
USP 4,787,040, entitled "Display System For Automotive Vehicle";
USP 4,731,769, entitled "Central Servicing And Information Controller For Vehicle Auxiliary Equipment";
USP 4,194,585, entitled "Instrument Mounting System";
DE 4228605 relating to a mobile communications device; and
GB2120424, entitled "Installation for the reception, transmission and processing of data."

Among disadvantages of prior art are the absence of a single, light computerized display system, which has a multitasking environment, and can be used for multiple users in fully interactive fashion, and which does not require the provision of what is essentially a local area network, merely residing on a mobile platform.

### SUMMARY OF THE INVENTION

The present invention seeks to provide an on-board computerized display system for use by multiple users located at different stations within a vehicle, employing a single working platform having associated therewith a plurality of displays, within a multitasking environment.

There is thus provided, in accordance with a preferred embodiment of the invention, a multiple-user computerized display system for use on a mobile platform, including a computer; two or more computer-driven display devices; bus apparatus connecting the two or more devices to the computer; and multitasking software resident in the computer for facilitating different, selectable use of each display device simultaneously.

Additionally in accordance with a preferred embodiment of the invention, each display device has a unique identity within the computerized display system, and has associated therewith one or more input device, each having an identity corresponding to the unique identity of an associated display device, wherein data entered via a selected input device includes a machine readable indication of the device with which the selected input device is associated.

Further in accordance with a preferred embodiment of the invention, the multitasking software also includes software for relating data received via each of a plurality of the input devices in the system with the display associated therewith.

Additionally in accordance with a preferred embodiment of the invention, the bus apparatus is operative to connect each display device and its associated input device to the computer.

Further in accordance with a preferred embodiment of the invention, each display device includes a graphic display which is connected to the computer via a predetermined graphic interface.

Additionally in accordance with a preferred embodiment of the invention, the input devices may be one or more of the following:
a touch screen;
a pointing device;
a joystick;
a keyboard;
an optical scanner;
a smartcard reader; and
a voice-operated input device.

Further in accordance with a preferred embodiment of the invention, the bus apparatus includes a USB.

Additionally in accordance with a preferred embodiment of the invention, there are also provided interfaces for connecting the computer with a plurality of peripheral devices. These interfaces may be interfaces for connecting peripheral devices to the computer for use by all system users, and/or interfaces for associating peripheral devices to one or more specific display device, for use in conjunction therewith.

Typically, the interfaces are for connecting any of the following peripheral devices:
a magnetic storage medium;
an optical storage medium;
a smartcard reader;
a music player;
a radio;
a graphic display device;
a wireless data network;
a wireless voice network; and
a navigation device.

Further in accordance with a preferred embodiment of the invention, the interface for a navigation device may be an interface for a GPS navigation device, or for a GPS and dead reckoning navigation device.

Additionally in accordance with a preferred embodiment of the invention, there are also provided interfaces for connecting the computer with a plurality of vehicle operations sensors.

In accordance with a further embodiment of the invention, there is provided a vehicle which incorporates the above multiple-user computerized display system therein. The vehicle may be any sort of land vehicle, aircraft, or sea vessel.

### BRIEF DESCRIPTION OF THE DRAWINGS

The present invention will be more fully appreciated and understood from the following detailed description, taken in conjunction with the drawings, in which:
Fig. 1 is a schematic, top level block diagram of an interactive, multiple user mobile computerized display system, constructed and operative in accordance with a preferred embodiment of the present invention;
Fig. 2 is a more detailed block diagram of the system shown in Fig. 1;
Fig. 3 is a diagram illustrating use of various input device drivers to identify the source of commands originating from input devices forming part of the system of the invention; and
Figs. 4A, 4B and 4C are diagrammatic illustrations of a land vehicle, an aircraft, and a sea vessel, respectively, exemplifying suitable mobile platforms for the system of the present invention.

### DETAILED DESCRIPTION OF A PREFERRED EMBODIMENT

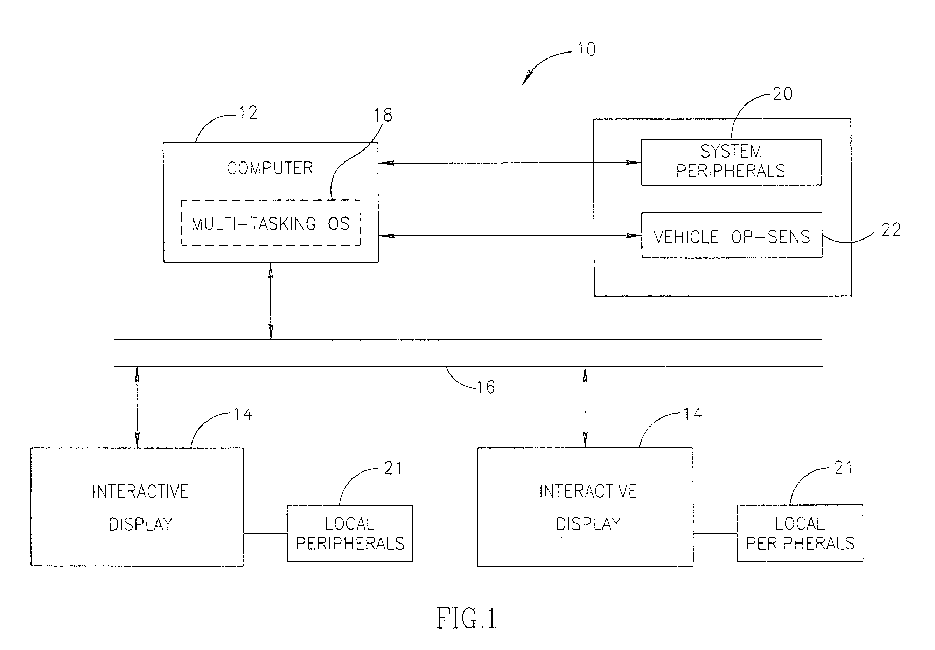

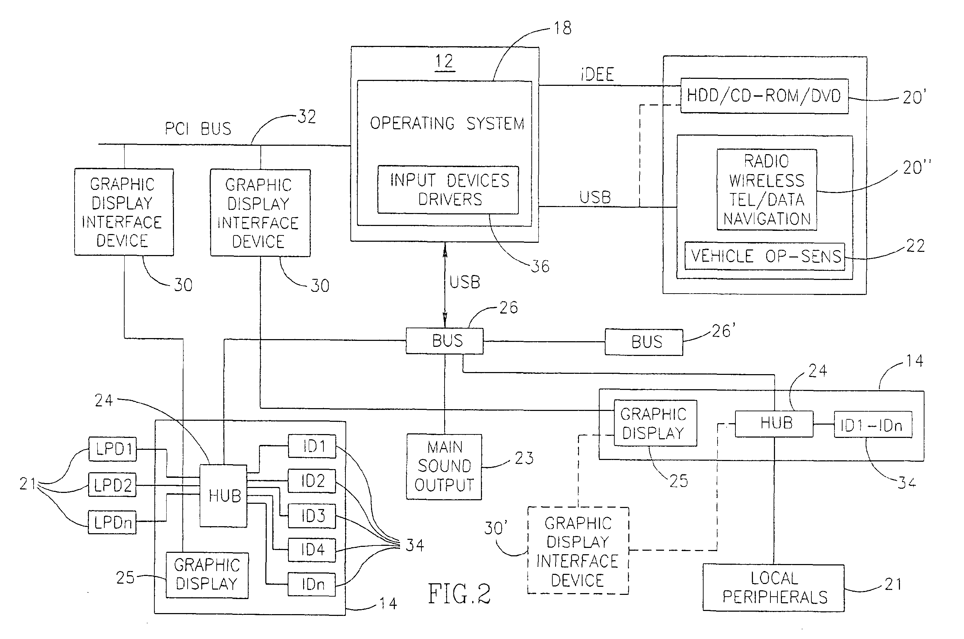

Referring now to Fig. 1, there is seen, in block diagram form, a multiple-user computerized display system, referenced generally 10, for use on a mobile platform, such as land vehicles including automobiles, buses and trains; aircraft; and sea vessels. System 10 includes a computer 12, two or more computer-driven display devices 14, bus apparatus 16 connecting the display devices 14 to computer 12, and multitasking software, shown schematically at 18, resident in computer 12 for facilitating different, selectable use of each display device 14, simultaneously. Bus apparatus 16 includes a plurality of buses 26 (Fig. 2), which are preferably of the universal serial bus (USB) type, although any other suitable equivalent may also be used. While the term "display device" is generally intended to mean a multimedia display, having video and audio capabilities and having associated therewith various kinds of peripheral devices, such as described below, in a narrower sense, it may be an audio or video/graphic device only, having access to various different data sources via operating system 18.

In the system of the present invention, it is aimed to provide full integration of multimedia, navigational, and communications data, shown collectively as system peripherals 20, and local peripherals 21; and vehicle operation data gathered from various vehicle operations sensors 22. Data gathered by sensors 22 may include engine temperature, vehicle speed, climate control data, as well as various other data which may be known, or desirable to display and/or control via the computerized display system of the present invention.

Referring now to Fig. 2, each display device 14 is seen to be connected via USB hub and bus 26 - or equivalent - to an appropriate chipset (not shown) of computer 12. In parallel, graphic display 25 is typically connected via a graphic display interface device 30 to computer 12, preferably via a PCI bus 32 or equivalent. An example of a suitable graphic display interface device is the well known Chip Technology 69000 Video Controller of Intel, Inc.

As shown in the drawing, in accordance with an alternative embodiment of the invention, graphic display interface device 30' may be connected between graphic display 25 and hub 24, depending on the capacity of bus 26 to transmit video at a suitable speed.

As each display device is intended to be used as a fully interactive multi-tasking-multimedia work station, one or more input devices, referenced 34, and shown as ID1 ― IDn, for example, a touch screen, a mouse or a keyboard, are provided in association with each display device 14. Similarly, while system peripherals 20 are provided for use by all system users, local peripherals 21, shown as LPD1 ― LPDn, may also be provided for use by a local user of display device 14. It will also be noted that a main sound output device 23, central to the system of the invention, may also be provided.

In order to use a plurality of display devices 14 within the system of the invention, each such display device is provided with a unique identity. In an example of a suitable operating system, such as either the Microsoft Windows® 98™ or 2000™ system or the QNX® operating system manufactured by QNX Software Systems Ltd., there is provided the option of having multiple desktop displays. These systems, however, do not permit use of more than one input device 34 at any one time.

Therefore, in accordance with a preferred embodiment of the present invention, each display device 14 and each input device 34 associated therewith, is connected, as described, via a USB hub 24 or equivalent, and, further each has a unique identity, as stated above, wherein the identity of each input device 34 is associated with a known display device 14. There is also provided as part of the software system resident in computer 12, one or more input devices drivers, shown schematically at 36, for each different type of input device. Accordingly, operation of any of the input devices 34 causes entry of data which includes a machine readable indication of the display device 14 with which the selected input device is associated.

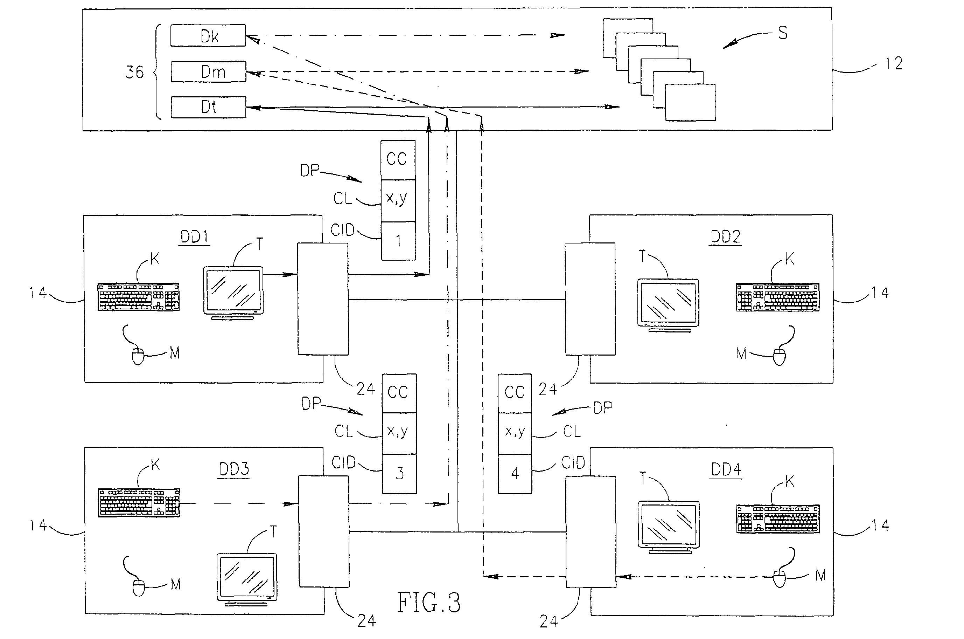

Referring now briefly to Fig. 3, there is seen, in block diagram form, a typical layout of four display devices 14, labeled DD1, DD2, DD3 and DD4. Each is seen, by way of non-limiting example only, to have a touch screen T, a keyboard K, and a mouse M, which are connected via a USB hub 24 and appropriate bus, to computer 12. As described above, as part of the operating system, there is provided a driver for each of the input device types. In the drawing, three exemplary drivers are indicated, and are labeled Dt, Dk and Dm, respectively, for the touch screen, keyboard and mouse. In the present invention, the computer has stored therein the identity of each input device installed in the system, and the display device to which each such input device is connected. Furthermore, a plurality of software applications, labeled collectively S, is seen to be resident in the computer 12; each application being operable by any of the input devices in the system.

In the illustrated example, each of the illustrated input devices may be used to input data into the computer, thereby to access any selected software application. The data package sent from any display device contains, in addition to a software command, an indication of the originating input device, and the (x,y) coordinate location in the display. In the illustrated example, three of the display devices, DD1, DD3 and DD4 are seen to be in use, a different input device being used by each. As seen, the data package DP produced by operation of any of the input devices contains a command chunk CC, a coordinate location chunk CL, and an identity chunk CID. For each device is operative to read data packages originating from an appropriate type of input device, and to decode the identity chunk CID so as to match it with the display device of origin. In the illustrated example, the display devices are DD1 for the touch screen, DD3 for the keyboard, and DD4 for the mouse. Subsequently, the driver forwards any required applications data to the appropriate software application, which provides any required output at the display device whereat the command originated.

Referring now once again to Fig. 2, it should be noted that, audio chips having a serial number, for example, the UDA1325, manufactured by Philips Semiconductors, a product division of Philips Electronics N.V., Eindhoven, Netherlands, can be identified by a platform such as the above-exemplified Windows® 98™ system, such that they do not necessarily require a separate connection via bus 16, as provided for the input devices 34, in order to associate them with a specific display device 14. For audio chips not having a serial number, however, the present system can be modified so as to identify each one, and to associate it with its display device 14, by provision of a suitable driver, in a similar manner to that described above, in conjunction with Fig. 3, for the input devices.

As stated above, one or more input devices 34, shown as ID1 ― IDn, may be provided in association with each single display device 14. Preferably, however, display device 14 includes at least a touch screen, and any of the devices selected from the following exemplary list of devices:
a pointing device, such as a computer mouse, trackball or glide pad;
a joystick;
a keyboard;
an optical scanner;
a smartcard reader; and
a voice-operated input device.

As described above, the computer 12 is also provided with interfaces to peripheral devices, preferably provided both centrally as system peripherals 20; and also as local peripherals 21. Such peripherals may include any of the following:

### GROUP I

a magnetic storage medium, such as a floppy diskette drive or a hard disk drive;
an optical storage medium, such as a CD-ROM or DVD, or any digital equivalent;
a smartcard reader; and
a music player, such as an MP3 player, or any digital equivalent; and

### GROUP II

a radio for receiving commercial radio broadcasts, CB radio, or various proprietary radio systems; and
a wireless network, including cellular and satellite telephone systems, used for voice and/or data, and including access to the internet.

The above groups I and II, in as far as they are illustrated as system peripherals in Fig. 2, are indicated therein by reference numerals 20' and 20", respectively. Preferably, as system peripheral devices, group I devices are connected to computer 12 by an IDEE bus, while group II devices are connected via a USB interface, or equivalent. In accordance with an alternative embodiment of the invention, however, the group I devices are also connected via a USB or equivalent interface. As local peripheral devices, however, all group I and II devices are connected via hub 24.

In accordance with a preferred embodiment of the invention, there is also provided as a peripheral device, a navigation device, such as a GPS and dead reckoning device, including, but not limited to, the proprietary GPS based proprietary system of NaftEl Technologies Ltd., of 7 Giborei Israel Street, Netanya 42504.

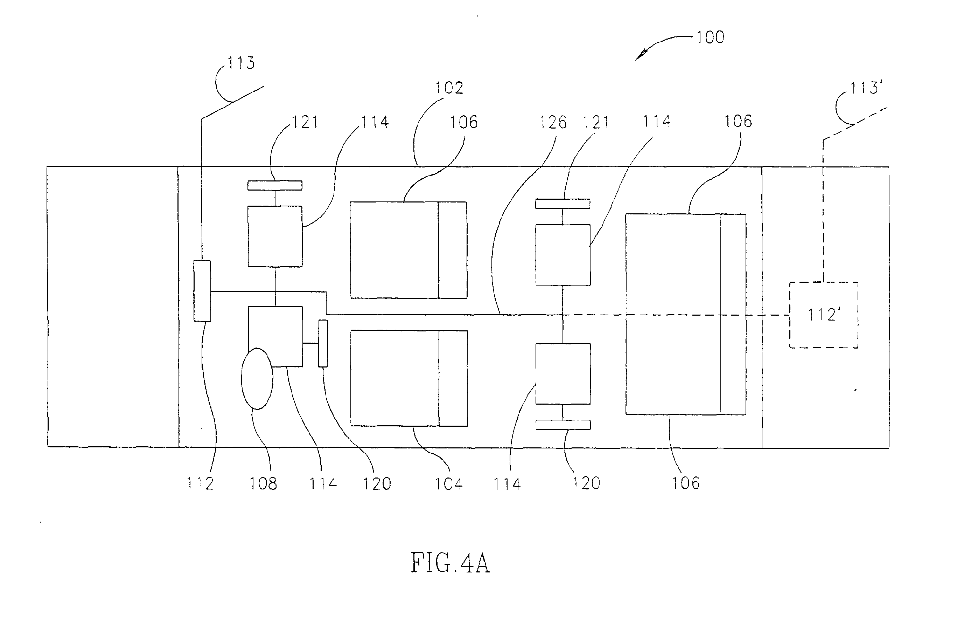

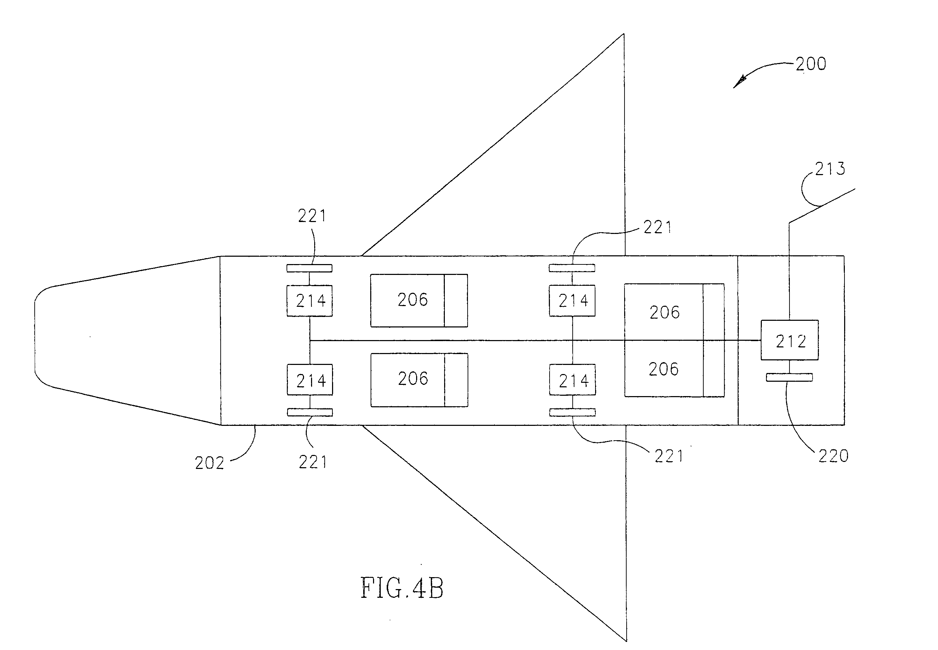

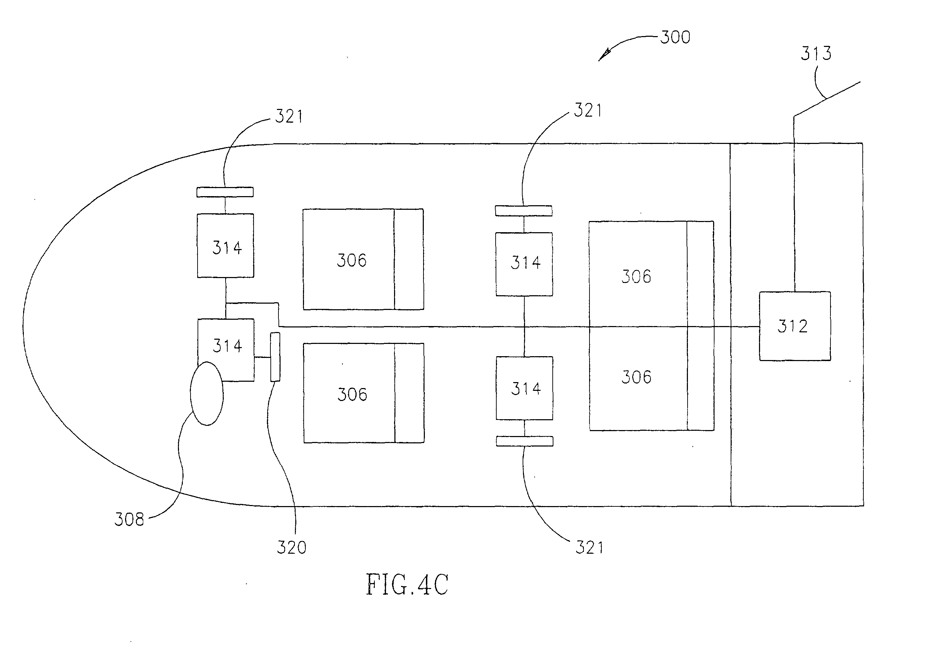

Referring now to Figs. 4A, 4B and 4C, there are seen vehicles which incorporate the system 10 of the present invention.

Referring initially to Fig. 4A, there is seen an automobile 100 having a chassis 102, a single driver's seat 104, three passenger seats 106, and a steering wheel 108, adjacent to the driving seat. The system includes various portions and components which are shown and described above in conjunction with Figs. 1-2, which are indicated with corresponding numerals, except with the addition of a prefix "1", and are not referred to specifically again herein.

Each seat has adjacent thereto a display device 114, preferably a touch screen, which is connected via a USB 116 or equivalent to the computer 112. Preferably, computer 112 is located in the standard radio slot although, optionally, it is seen to be located in the vehicle rear, as shown by broken lines. One or more antennae 113 are also provided for various wireless functions, such as radio reception, cellular/satellite transmission, and GPS. Also provided adjacent to each display device 114 are one or more local peripheral devices 121, which may be any of the local peripheral devices shown and described above in conjunction with Fig. 2. It will be noted, however, that the system peripheral devices 120 may be provided adjacent to the driver's seat 120, proximate to steering wheel 108.

Operation of the system as a multi-tasking system operating on the basis of a single working platform only, and whereby each display device may be used totally independently from each of the others, is generally as described above and is not described again herein.

Referring now to Fig. 4B, there is seen an aircraft 200 having a chassis 202, and a plurality of passenger seats 206. The system includes various portions and components which are shown and described above in conjunction with Figs. 1-2, which are indicated with corresponding numerals, except with the addition of a prefix "2", and are not referred to specifically again herein.

Each seat has adjacent thereto a display device 214, such as a touch screen, which is connected via a USB or equivalent bus 216 to the computer 212. One or more antennae 213 are also provided for various wireless functions, such as radio reception, cellular/satellite transmission, and GPS. Also provided adjacent to each display device 214 is a peripheral device 220, which may be any of the local peripheral devices shown and described above in conjunction with Fig. 2.

Operation of the system as a multi-tasking system operating on the basis of a single working platform only, and whereby each display device may be used totally independently from each of the others, is generally as described above and is not described again herein.

Referring now to Fig. 4C, there is seen a sea vessel 300 having a chassis 302, and a plurality of seats 306. The system includes various portions and components which are shown and described above in conjunction with Figs. 1-2, which are indicated with corresponding numerals, except with the addition of a prefix "3", and are not referred to specifically again herein.

Each seat has adjacent thereto a display device 314, preferably a touch screen, which is connected via a USB or equivalent bus 316 to the computer 312. One or more antennae 313 are also provided for various wireless functions, such as radio reception, cellular/satellite transmission, and GPS. Also provided adjacent to each display device 314 are one or more peripheral devices 321, which may be any of the local peripheral devices shown and described above in conjunction with Fig. 2. System peripheral devices 320 may be provided in proximity to steering equipment 308, by way of example, only.

Operation of the system as a multi-tasking system operating on the basis of a single working platform only, and whereby each display device may be used totally independently from each of the others, is generally as described above and is not described again herein.

It will be appreciated by persons skilled in the art that the scope of the preset invention is not limited to what has been specifically shown and described hereinabove, merely by way of example. Rather, the scope of the present invention is limited solely by the claims, which follow:

## Claims

**1.** A multiple-user computerized display system for use on a mobile platform, including:
a computer;
at least two computer-driven display devices;
bus apparatus connecting said at least two devices to said computer; and
multitasking software resident in said computer for facilitating different, selectable use of each said display device simultaneously.

**2.** A multiple-user computerized display system according to claim 1, wherein each said display device has a unique identity within said computerized display system, and has associated therewith at least one input device, each having an identity corresponding to the unique identity of an associated display device, wherein data entered via a selected input device includes a machine readable indication of said device with which said selected input device is associated.

**3.** A multiple-user computerized display system according to claim 2, wherein said multitasking software also includes software for relating data received via each of a plurality of said input devices in said system with said display associated therewith.

**4.** A multiple-user computerized display system according to claim 3, wherein said bus apparatus is operative to connect each said display device and its at least one associated input device to said computer.

**5.** A multiple-user computerized display system according to claim 4, wherein each said display device includes a graphic display which is connected to said computer via a predetermined graphic interface.

**6.** A multiple-user computerized display system according to claim 5, wherein said at least one input device is selected from the group which consists of:
a touch screen;
a pointing device;
a joystick;
a keyboard;
an optical scanner;
a smartcard reader; and
a voice-operated input device.

**7.** A multiple-user computerized display system according to claim 4, wherein said bus apparatus includes a USB.

**8.** A multiple-user computerized display system according to claim 1, and also including interfaces for connecting said computer with a plurality of peripheral devices.

**9.** A multiple-user computerized display system according to claim 8, wherein said interfaces include at least one the group which consists of:
interfaces for connecting peripheral devices to said computer for use by all system users; and
interfaces for associating peripheral devices to at least one specific one of said display devices, for use in conjunction therewith.

**10.** A multiple-user computerized display system according to claim 8, wherein said interfaces include at least one interface for the peripheral devices selected from the group which consists of:
a magnetic storage medium;
an optical storage medium;
a smartcard reader;
a music player;
a radio;
a graphic display device;
a wireless data network;
a wireless voice network; and
a navigation device.

**11.** A multiple-user computerized display system according to claim 10, wherein said interface for a navigation device includes an interface for a GPS navigation device.

**12.** A multiple-user computerized display system according to claim 10, wherein said interface for a navigation device includes an interface for a GPS and dead reckoning navigation device.

**14.** A multiple-user computerized display system according to claim 1, and also including interfaces for connecting said computer with a plurality of vehicle operations sensors.

**15.** A vehicle having a multiple-user computerized display system therein, which includes:
a chassis;
a computer supported on said chassis;
at least two computer-driven display devices supported on said chassis;
bus apparatus connecting said at least two devices to said computer; and
multitasking software resident in said computer for facilitating different, selectable use of each said display device simultaneously.

**16.** A vehicle according to claim 15, wherein each said display device has a unique identity within said computerized display system, and has associated therewith at least one input device, each having an identity corresponding to the unique identity of an associated display device, wherein data entered via a selected input device includes a machine readable indication of said device with which said selected input device is associated.

**17.** A vehicle according to claim 16, wherein said multitasking software also includes software for relating data received via each of a plurality of said input devices in said system with said display associated therewith.

**18.** A vehicle according to claim 17, wherein said bus apparatus is operative to connect each said display device and its at least one associated input device to said computer.

**19.** A vehicle according to claim 18, wherein each said display device includes a graphic display which is connected to said computer via a predetermined graphic interface.

**20.** A vehicle according to claim 19, wherein said at least one input device is selected from the group which consists of:
a touch screen;
a pointing device;
a joystick;
a keyboard;
an optical scanner;
a smartcard reader; and
a voice-operated input device.

**21.** A vehicle according to claim 18, wherein said bus apparatus includes a USB.

**22.** A vehicle according to claim 15, and also including interfaces for connecting said computer with a plurality of peripheral devices.

**23.** A vehicle according to claim 22, wherein said interfaces include at least one the group which consists of:
interfaces for connecting peripheral devices to said computer for use by all system users; and
interfaces for associating peripheral devices to at least one specific one of said display devices, for use in conjunction therewith.

**24.** A vehicle according to claim 22, wherein said interfaces include at least one interface for the peripheral devices selected from the group which consists of:
a magnetic storage medium;
an optical storage medium;
a smartcard reader;
a music player;
a radio;
a graphic display device;
a wireless data network;
a wireless voice network; and
a navigation device.

**25.** A vehicle according to claim 24, wherein said interface for a navigation device includes an interface for a GPS navigation device.

**26.** A vehicle according to claim 24, wherein said interface for a navigation device includes an interface for a GPS and dead reckoning navigation device.

**27.** A vehicle according to claim 15, and also including interfaces for connecting said computer with a plurality of vehicle operations sensors.

**28.** A vehicle according to claim 15, consisting of a land vehicle.

**29.** A vehicle according to claim 15, consisting of an aircraft.

**30.** A vehicle according to claim 15, consisting of a sea vessel.
